# FASCICULE DE BREVET EUROPEEN

(11) **EP 1 072 393 B1**
(45) Date de publication et mention de la délivrance du brevet: **09.04.2003**
(21) Numéro de dépôt: 00202532.8
(22) Date de dépôt: 17.07.2000
(51) Int. Cl.: B29C 69/00, B29C 45/14, B29C 65/00, B60K 15/03

(54) **Corps creux et procédé de fabrication de ce corps creux**
Hohlkörper und Verfahren zur Herstellung dieses Hohlkörpers
Hollow body and method for manufacturing this hollow body

(30) Priorité: 19.07.1999 BE 9900494
(43) Date de publication de la demande: 31.01.2001
(73) Titulaire: Inergy Automotive Systems Research (SA), 1120 Bruxelles (BE)
(72) Inventeur: Gilliard, Pierre, 1150 Bruxelles (BE); van Schaftingen, Jules-Joseph, 1300 Wavre (BE)
(74) Mandataire: Decamps, Alain René François

(56) Documents cités:
- EP-A- 0 465 252
- EP-A- 0 764 515
- EP-A- 0 888 867
- US-A- 5 129 544
- US-A- 5 707 691
- PATENT ABSTRACTS OF JAPAN vol. 1998, no. 8, 30 juin 1998 (1998-06-30) & JP 10 080463 A (TERUMO CORP), 31 mars 1998 (1998-03-31)
- PATENT ABSTRACTS OF JAPAN vol. 17, no. 664 (M-1523), 8 décembre 1993 (1993-12-08) & JP 05 220784 A (TOKAN KOGYO CO LTD), 31 août 1993 (1993-08-31)
- Encyclopedia of polymer science and engineering, Volume 9, John Wiley & Sons, 1987, page 49

## Description

La présente invention concerne un corps creux multicouches en matière thermoplastique, imperméable aux liquides et/ou aux gaz.

Les corps creux, en particulier les réservoirs utilisés actuellement pour la conservation de liquides et/ou de gaz sont souvent constitués essentiellement de matière plastique, en raison des avantages de poids, de résistance mécanique et chimique et de mise en oeuvre facilitée, en particulier lorsqu'ils présentent des formes extérieures complexes.

Les réservoirs en matière plastique sont largement répandus dans les véhicules automobiles, où ils sont utilisés pour contenir des fluides divers : liquides de frein, de lave-glaces et de lave-phares, réservoirs à carburants divers (gasoil, essence, gaz LPG).

Il est souvent impératif, pour les usages automobile d'assurer l'imperméabilité des réservoirs embarqués, en particulier dans le cas des réservoirs à carburant.

Diverses techniques sont connues pour imperméabiliser les surfaces d'objets en matière plastique. Deux approches différentes ont conduit à proposer des solutions qui ont été mises en oeuvre dans les procédés de fabrication de ces objets. La première est basée sur le traitement superficiel de l'objet au moyen d'un plasma ou d'un réactif chimique tel que l'anhydride sulfurique ou le fluor gazeux susceptibles de modifier les molécules de la matière plastique situées à la surface de l'objet. Une autre approche consiste à intercaler dans l'épaisseur de la matière plastique constituant l'objet une couche comprenant une matière particulière, souvent thermoplastique, à propriété barrière vis-à-vis d'un ou de plusieurs gaz ou liquides. Dans ce dernier cas, on a fait un large usage des techniques de mise en oeuvre par co-extrusion.

A titre de matériau barrière, on utilise couramment des polymères fluorés, des polyamides, des polyacrylonitriles, des polyesters ainsi que des halogénures de polyvinylidène. L'efficacité barrière de ces matériaux n'est cependant jamais totale pour tous les types de gaz ou de liquide avec lesquels ils sont mis en contact. C'est pourquoi on a recherché des produits barrière plus efficaces que ceux cités supra. Des polymères à cristaux liquides ("Liquid Crystal Polymer" ou LCP) ont été proposés afin de pouvoir atteindre une imperméabilité quasi totale pour une gamme étendue de gaz et de liquides.

La demande de brevet JP-09/76380-A divulgue un récipient pour la conservation de denrées alimentaires congelées pouvant aussi être utilisé pour la préparation des aliments en four à micro-ondes, qui présente des propriétés barrière aux gaz et est constitué de coquilles bicouches en matière plastique présentant un rebord. Le'récipient est fabriqué par injection d'une couche interne en matière plastique de structure choisie parmi le polyéthylène, le polypropylène, le polyéthylènetéréphtalate, le polybutylènetéréphtalate et le polycarbonate et surmoulage d'une couche externe en LCP. Le rebord présente une surface de soudage en matière plastique de structure.

Ces récipients connus sont cependant de petite taille et sont mal adaptés aux environnements industriels ou automobiles. De plus, leur durée de vie est généralement très courte et n'excède souvent pas quelques mois. Passé ce délai, ils perdent rapidement leurs propriétés barrière.

On connaît aussi la demande de brevet européen EP-0 888 867-A1 qui divulgue des réservoirs à carburant formés par assemblage de deux parties concaves en matière plastique comprenant chacune au moins deux couches incluant une couche de résine de structure et une couche intérieure sous forme de feuille adhérant à la couche de structure et qui forme une barrière imperméable aux gaz.

Le brevet US-5,129,544 divulgue un réservoir à carburant pour véhicule formé de l'assemblage par soudage de deux coquilles en matière plastique constituées de structures laminées comprenant une couche intérieure en matériau imperméable aux vapeurs d'hydrocarbures et au moins une couche extérieure en polymère résistant à l'abrasion et à l'impact.

Le brevet US-5,707,691 décrit l'enduisage de l'intérieur d'un réservoir en matière plastique tel que les bouteilles en PET pour boisson au moyen d'un spray liquide contenant les monomères d'un LCP, que l'on oriente selon deux axes distincts puis que l'on polymérise in situ.

La présente invention a pour but de fournir des corps creux imperméables aux liquides ou aux gaz de dimensions variées pouvant aller jusqu'à des corps creux de dimension importante, robustes et gardant leurs propriétés mécaniques et barrière durant de nombreuses années dans des conditions environnementales sévères, tels que les réservoirs utilisés pour le stockage de carburant, en particulier les réservoirs à carburants de moteurs thermiques comme, par exemple, les réservoirs embarqués dans les véhicules automobiles.

A cet effet, l'invention concerne un corps creux multicouches en matière thermoplastique, obtenu par soudage d'au moins deux pièces creuses moulées et dont une couche intérieure au moins comprend un matériau barrière, selon lequel la couche comprenant un matériau barrière comprend au moins un polymère à cristaux liquides (LCP).

Par corps creux multicouches, on entend désigner un corps creux dont les parois sont formées d'un empilage d'au moins deux couches de matières distinctes.

Par carburant, on entend désigner tout produit ou composition liquide ou gazeux pouvant être utilisé à titre de combustible et/ou de comburant pour l'alimentation d'un moteur thermique ou d'une pile à combustible.

Les corps creux conformes à l'invention sont en matière thermoplastique, c'est-à-dire une matière plastique qui, sous l'influence de la chaleur, fond ou se ramollit suffisamment pour permettre sa mise en forme. Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

La matière thermoplastique d'une couche particulière peut être unique dans la structure multicouches du corps creux. Elle peut aussi se retrouver dans au moins deux couches distinctes de cette structure. Dans l'une ou l'autre situation, une matière thermoplastique particulière peut se trouver seule ou en présence d'autres composés choisis parmi les additifs de nature diverse destinés à modifier les propriétés intrinsèques de la matière thermoplastique et bien connus de l'homme du métier. Des exemples de tels additifs sont, non limitativement: des matières de charge, des stabilisants, des plastifiants, des lubrifiants, des écrans aux rayons UV,... On peut encore associer au moins deux matières thermoplastiques différentes au sein d'une même couche de la structure. Dans ce cas, la couche peut aussi, éventuellement, contenir au moins un des additifs cités *supra.*

Les corps creux selon l'invention sont imperméables aux liquides et aux gaz; en d'autres termes, ils ont la faculté de pouvoir retenir les liquides et les gaz en contact avec leur surface et bloquer la migration de ces matières au travers de leur masse. En l'occurrence, les corps creux sont imperméables aux gaz et aux liquides aqueux ou organiques susceptibles d'entrer en contact avec eux. Parmi les liquides, comprenant éventuellement un soluté inorganique ou organique, on rencontre l'eau, les alcools aliphatiques et alicycliques, les hydrocarbures et, en particulier, les essences carburants pour moteurs à combustion interne et le gasoil pour moteurs Diesel. Parmi les gaz couramment rencontrés on peut citer, l'air, l'oxygène, l'anhydride carbonique et les vapeurs de carburant. Plusieurs liquides et/ou gaz différents en mélange peuvent aussi venir en contact avec les objets à imperméabiliser.

Selon l'invention, le corps creux est obtenu par soudage d'au moins deux pièces creuses moulées.

Par soudage on entend désigner l'opération d'assemblage d'au moins deux objets qui comporte une étape de fusion réalisée à partir d'au moins une portion de la surface de chaque objet, une étape de mise en contact des objets et une dernière étape de refroidissement jusqu'au retour vers l'état solide de la matière fondue, en vue de l'obtention d'un assemblage composite d'objets qui se comporte, du point de vue de la mécanique, comme un objet unique.

La pièce creuse désigne toute pièce ou objet dont la surface présente au moins une partie vide ou concave. En particulier, elle désigne des coquilles en matière plastique que l'on peut souder bords à bords.

La technique de moulage utilisée pour fabriquer les pièces creuses peut être indifféremment toute technique de moulage bien connue par elle-même dans le domaine de la fabrication d'objets en matière plastique. Elle peut, par exemple, consister en moulage par injection, moulage par compression, moulage par injection-compression, moulage par soufflage ou encore moulage par thermoformage. Par moulage par injection, on entend désigner une technique de moulage consistant à introduire de la matière plastique fondue sous pression dans un moule jusqu'au remplissage complet du volume fermé délimité par le moule, de refroidir pour figer le corps creux, puis d'ouvrir et d'ôter le moule. La technique de moulage par compression, quant à elle, consiste à déposer de la matière plastique dans un moule ouvert, puis de refermer le moule et d'appliquer une pression pendant le temps nécessaire à la mise en forme de l'objet qui est ensuite démoulé après ouverture du moule. La technique de moulage par injection-compression consiste à d'abord injecter de la matière plastique dans un moule ouvert, ensuite de refermer le moule et d'appliquer une pression, comme dans la technique de moulage par compression. La technique de moulage par soufflage consiste à déformer un objet en matière plastique par pression sur les parois d'un moule sous l'action d'une composition gazeuse sous pression. La technique de moulage par thermoformage consiste enfin à imprimer à un objet en matière plastique une déformation permanente sous l'action de la chaleur. La technique de moulage par injection a donné de bons résultats.

Par matériau barrière, on entend désigner un matériau imperméable aux liquides et aux gaz et, en particulier, les résines polymériques barrière.

Selon l'invention, la couche comprenant un matériau barrière comprend au moins un polymère à cristaux liquides.

Par polymère à cristaux liquides (Liquid Crystal Polymer ou « LCP »), on entend désigner un polymère dont les molécules se présentent dans un état fluide et ordonné dans une gamme de températures intermédiaires entre celles qui correspondent à l'état solide et celles correspondant à l'état fondu complètement désordonné (polymère thermotropique) ou encore un polymère susceptible de se présenter à l'état ordonné en solution (polymère lyotropique).

De préférence, le LCP utilisé dans le procédé selon l'invention appartient à la classe des polymères thermotropiques. De tels polymères comprennent généralement des chaînes allongées où alternent des unités rigides et des unités flexibles.

Des exemples de tels polymères sont donnés dans l'ouvrage « Encyclopedia of Polymer Science and Engineering, édité par John Wiley & Sons, New-York, 1987 Vol. 9, pages 1 à 61 et en particulier les polyesters des tableaux 12 (pages 50 et 51) et 13 (page 52).

Les polymères LCP préférés sont les copolyesters de l'acide p-hydroxybenzoïque et de l'acide 6-hydroxy-2-naphtoïque et les copolyesters de l'acide p-hydroxybenzoïque avec l'acide téréphtalique et le 4,4'-biphénol disponibles sur le marché, par exemple les copolyesters de marque VECTRA ® et XYDAR ®.

Tout particulièrement préférés sont les polymères LCP, en particulier ceux cités au paragraphe précédent, capables de pouvoir former des films de faible épaisseur (≤ 0,030 mm et, de préférence, ≤ 0,020 mm).

Selon l'invention, la couche comprenant un matériau barrière est une couche intérieure. Par couche intérieure, on entend désigner aussi bien la couche en contact direct avec le fluide, la plus externe de la paroi multicouches du corps creux et se trouvant du côté intérieur de ce corps creux, qu'une couche interne quelconque de cette paroi, qui n'est en contact qu'avec d'autres couches de la structure, à l'exclusion de tout fluide atmosphérique ou contenu dans le corps creux.

Les corps creux conformes à l'invention conviennent pour la réalisation de récipients ou de tuyaux dont la perméabilité aux liquides et aux gaz est extrêmement faible.

En particulier, ils sont bien adaptés pour le montage sur un véhicule automobile. Ils conviennent tout particulièrement bien comme réservoirs à essence ou à gasoil pour les véhicules automobiles. Ils peuvent aussi servir à la fabrication d'accessoires imperméables destinés à équiper ces réservoirs. Comme accessoires pour réservoirs, on peut citer, de manière non limitative : les tubulures de remplissage, les lignes de transport de carburant, les jauges et les pompes à carburant, les canisters destinés à contenir une composition retenant les vapeurs de carburant, les clapets de types divers, ...

L'invention concerne aussi un procédé pour fabriquer un corps creux conforme aux corps creux selon l'invention définis *supra*.

A cet effet, l'invention concerne un procédé pour fabriquer un corps creux multicouches en matière thermoplastique, imperméable aux liquides et/ou aux gaz, qui comporte les opérations suivantes :
■ dans une première étape, on dépose dans une partie concave d'un moule pour la réalisation d'une pièce creuse, un film barrière comprenant un LCP, de surface au moins égale à celle de la surface concave du moule, on positionne une partie convexe du moule au-dessus du film et on ferme le moule, de manière à imprimer au film une forme correspondant à celle de la pièce creuse à fabriquer;
■ dans une deuxième étape, on surmoule le film barrière à l'intérieur du moule par injection d'un matériau thermoplastique de structure via au moins une buse d'injection située du côté de la partie concave du moule, de façon à recouvrir la couche de film barrière par une couche extérieure de matériau thermoplastique de structure, on refroidit, on ouvre le moule et on démoule la pièce creuse ainsi obtenue;
■ on répète les opérations précédentes de façon à obtenir au moins deux pièces creuses;
■ dans une étape finale, on soude les pièces creuses de manière à obtenir un corps creux.

Le vocable "pièce creuse" a ici le même sens que celui déjà explicité plus haut.

Dans ce procédé, le film barrière employé a été obtenu dans un procédé antérieur, distinct du procédé selon l'invention. Les films barrières comprenant un LCP disponibles sur le marché conviennent bien.

Selon un procédé particulier conforme à l'invention, le film barrière est un film multicouches qui comprend au moins une couche de LCP et au moins une couche de matière adhésive.

Par couche de matière adhésive, on désigne une couche qui comprend au moins un adhésif.

La nature de l'adhésif peut varier largement d'une pièce creuse à l'autre, pour autant que cet adhésif reste compatible avec les autres constituants de la pièce creuse avec lesquels il est mis en contact et qu'il ne dégrade pas significativement les propriétés mécaniques de l'ensemble de la structure multicouches.

Comme exemple d'adhésif, on peut citer ceux décrits dans la demande de brevet français 98.03571 au nom de SOLVAY.

L'adhésif le plus employé est un adhésif polymère se présentant sous la forme d'une polyoléfine fonctionnalisée. Par polyoléfine fonctionnalisée, on entend désigner toute polyoléfine comprenant, outre des unités dérivées d'oléfines, des unités monomériques fonctionnelles. Celles-ci peuvent être incorporées soit dans la chaîne principale de la polyoléfine, soit dans ses chaînes latérales. Elles peuvent également être incorporées directement dans le squelette de ces chaînes principales et.latérales, par exemple par copolymérisation d'un ou de plusieurs monomères fonctionnels avec le ou les monomères oléfiniques ou encore résulter du greffage d'un ou des plusieurs monomères fonctionnels sur lesdites chaînes, ultérieurement à la fabrication de la polyoléfine. Plusieurs polyoléfines fonctionnalisées peuvent aussi être utilisées en mélange.

On choisit les unités monomériques fonctionnelles de la polyoléfine fonctionnalisée parmi les acides carboxyliques, les diacides carboxyliques et les anhydrides correspondant à ces diacides. Ces unités monomériques proviennent généralement de la copolymérisation ou du greffage d'au moins un monomère insaturé possédant les mêmes fonctions. Des exemples de monomères utilisables sont, non limitativement, l'acide acrylique, l'acide méthacrylique, l'acide maléique, l'acide fumarique, l'acide itaconique, l'anhydride maléique, l'anhydride fumarique et l'anhydride itaconique. De préférence, les unités monomériques fonctionnelles proviennent de la copolymérisation ou du greffage d'anhydride maléique.

L'invention concerne aussi un procédé alternatif pour fabriquer un corps creux tel que défini *supra*.

Selon ce procédé alternatif, on met en oeuvre les opérations suivantes :
■ dans une première étape, on fabrique une pièce creuse en matériau thermoplastique de structure par moulage d'un matériau thermoplastique, ouverture du moule et démoulage;
■ dans une deuxième étape, on enduit ensuite par peinture la surface concave de la pièce démoulée au moyen d'un matériau barrière comprenant un LCP;
■ on répète les opérations précédentes de façon à obtenir au moins deux pièces creuses enduites;
■ dans une étape finale, on soude les pièces creuses enduites de manière à obtenir un corps creux.

Par le vocable "peinture", on entend désigner tout procédé d'enduction d'une surface solide par un matériau capable de la recouvrir totalement et de l'isoler ainsi de l'atmosphère extérieure, le matériau étant dispersé dans un fluide qui est éliminé en fin de processus d'enduction. Par extension, le vocable "peinture" désigne aussi la composition contenant ce matériau dispersé dans le fluide.

Selon un premier mode de réalisation du procédé alternatif selon l'invention, on réalise l'enduction par application sur la surface concave de la pièce creuse démoulée d'une peinture liquide comprenant un LCP en solution. Après enduction, on procède à un séchage de la pièce creuse.

Selon un deuxième mode de réalisation du procédé alternatif selon l'invention, on réalise l'enduction par application sur la surface concave de la pièce creuse démoulée d'une peinture sous forme de poudre sèche comprenant un LCP, dispersée dans un gaz, que l'on projette sur la surface de la pièce sortant du moule.

En variante au procédé alternatif ci-dessus, dans sa première ou sa deuxième forme de réalisation, on applique à l'intérieur du moule, avant démoulage de la pièce creuse, une couche de matière adhésive par surmoulage sur le matériau thermoplastique de structure.

La couche de matière adhésive et la nature des adhésifs sont conformes à ceux explicités supra dans le cas du surmoulage d'un film barrière par le matériau de structure.

## Revendications

1. Corps creux multicouches en matière thermoplastique, obtenu par soudage d'au moins deux pièces creuses moulées et dont une couche intérieure au moins comprend un matériau barrière, **caractérisé en ce que** la couche comprenant un matériau barrière comprend au moins un polymère à cristaux liquides (LCP).

2. Corps creux selon la revendication précédente, **caractérisé en ce qu'**il est un réservoir à carburant destiné à être monté sur un véhicule automobile.

3. Corps creux selon la revendication 1 ou 2, **caractérisé en ce que** le LCP est choisi parmi les copolyesters de l'acide p-hydroxybenzoïque et de l'acide 6-hydroxy-2-naphtoïque et les copolyesters de l'acide p-hydroxybenzoïque avec l'acide téréphtalique et le 4,4'-biphénol.

4. Procédé pour fabriquer un corps creux conforme à la revendication précédente, **caractérisé en ce qu'**il comporte les opérations suivantes :
■ dans une première étape, on dépose dans une partie concave d'un moule pour la réalisation d'une pièce creuse, un film barrière comprenant un LCP, de surface au moins égale à celle de la surface concave du moule, on positionne une partie convexe du moule au-dessus du film et on ferme le moule, de manière à imprimer au film une forme correspondant à celle de la pièce creuse à fabriquer, on écarte légèrement les parties du moule tout en maintenant le film barrière sur la partie convexe du moule;
■ dans une deuxième étape, on surmoule le film barrière à l'intérieur du moule par injection d'un matériau thermoplastique de structure via au moins une buse d'injection située du côté de la partie concave du moule, de façon à recouvrir la couche de film barrière par une couche extérieure de matériau thermoplastique de structure, on refroidit, on ouvre le moule et on démoule la pièce creuse ainsi obtenue;
■ on répète les opérations précédentes de façon à obtenir au moins deux pièces creuses;
■ dans une étape finale, on soude les pièces creuses de manière à obtenir un corps creux.

5. Procédé selon la revendication précédente, **caractérisé en ce que** le film barrière est un film multicouches comprenant au moins une couche de LCP et au moins une couche de matière adhésive.

6. Procédé pour fabriquer un corps creux conforme à une quelconque des revendications 1 à 3, **caractérisé en ce qu'**il comporte les opérations suivantes :
■ dans une première étape, on fabrique une pièce creuse en matériau thermoplastique de structure par moulage d'un matériau thermoplastique, ouverture du moule et démoulage;
■ dans une deuxième étape, on enduit ensuite par peinture la surface concave de la pièce démoulée au moyen d'un matériau barrière comprenant un LCP;
■ on répète les opérations précédentes de façon à obtenir au moins deux pièces creuses enduites;
■ dans une étape finale, on soude les pièces creuses enduites de manière à obtenir un corps creux.

7. Procédé selon la revendication précédente, **caractérisé en ce que** l'enduction se fait par application sur la pièce démoulée d'une peinture liquide comprenant un LCP en solution, suivie d'un séchage de la pièce.

8. Procédé selon la revendication 6, **caractérisé en ce que** l'enduction se fait par application sur la pièce démoulée d'une peinture sous forme de poudre sèche comprenant un LCP, dispersée dans un gaz, qui est projetée sur la surface de la pièce sortant du moule.

9. Procédé selon la revendication 7 ou 8, **caractérisé en ce que**, avant démoulage, on applique, à l'intérieur du moule, une couche de matière adhésive par surmoulage sur le matériau thermoplastique de structure.

## Claims

1. Multilayer hollow body made of thermoplastic, obtained by welding at least two moulded hollow parts together and at least one layer of which comprises a barrier material, **characterized in that** the layer comprising a barrier material is an inner layer which comprises at least one liquid-crystal polymer (LCP).

2. Hollow body according to the preceding claim, **characterized in that** it is a fuel tank intended to be mounted on a motor vehicle.

3. Hollow body according to Claim 1 or 2, **characterized in that** the LCP is chosen from p-hydroxybenzoic acid/6-hydroxy-2-naphthoic acid copolyesters and p-hydroxybenzoic acid/terephthalic acid/4,4'-biphenol copolyesters.

4. Process for manufacturing a hollow body according to the preceding claim, **characterized in that** it comprises the following operations:
■ in a first step, a barrier film comprising an LCP is deposited in a concave portion of a mould for producing a hollow part, the said film having an area at least equal to that of the concave surface of the mould, a convex portion of the mould is positioned above the film and the mould is closed, so as to impress on the film a shape corresponding to that of the hollow part to be manufactured, and the portions of the mould are moved apart slightly, while keeping the barrier film on the convex part of the mould;
■ in a second step, the barrier film is overmoulded inside the mould by injecting a structural thermoplastic via at least one injection nozzle located on the concave portion side of the mould, so as to cover the layer of barrier film with an outer layer of structural thermoplastic, cooling is applied, the mould is opened and the hollow part thus obtained is removed from the mould;
■ the above operations are repeated so as to obtain at least two hollow parts;
■ in a final step, the hollow parts are welded together so as to obtain a hollow body.

5. Process according to the preceding claim, **characterized in that** the barrier film is a multilayer film comprising at least one layer of LCP and at least one layer of adhesive.

6. Process for manufacturing a hollow body according to any one of Claims 1 to 3, **characterized in that** it comprises the following operations:
■ in a first step, a hollow part made of structural thermoplastic is manufactured by moulding a thermoplastic, opening the mould and removing the part from the mould.
■ in a second step, the concave surface of the demoulded part is then coated, by painting, by means of a barrier material comprising an LCP;
■ the above operations are repeated so as to obtain at least two coated hollow parts;
■ in a final step, the coated hollow parts are welded together so as to obtain a hollow body.

7. Process according to the preceding claim, **characterized in that** the coating is carried out by applying a liquid paint comprising an LCP in solution to the demoulded part, followed by drying the part.

8. Process according to Claim 6, **characterized in that** the coating is carried out by applying to the demoulded part a paint in dry powder form comprising an LCP, dispersed in a gas, which is sprayed onto the surface of the part leaving the mould.

9. Process according to Claim 7 or 8, **characterized in that**, before demoulding, a layer of adhesive is applied to the inside of the mould by overmoulding on the structural thermoplastic.

## Patentansprüche

1. Mehrlagiger Hohlkörper aus thermoplastischem Material, erhalten durch Verschweißen von wenigtens zwei geformten Hohlteilen, von dem wenigstens eine Innenlage ein Sperrmaterial umfaßt, **dadurch gekennzeichnet, daß** die ein Sperrmaterial umfassende Lage wenigstens ein Flüssigkristallpolymer (LCP) umfaßt.

2. Hohlkörper nach dem vorangehenden Anspruch, **dadurch gekennzeichnet, daß** er ein Kraftstoffbehälter ist, der zur Montage an einem Kraftfahrzeug bestimmt ist.

3. Hohlkörper nach Anspruch 1 oder 2, **dadurch gekennzeichnet, daß** das LCP unter den Copolyestern der p-Hydroxybenzoesäure und der 6-Hydroxy-2-naphtoesäure und den Copolyestern der p-Hydroxybenzoesäure mit Terephthalsäure und 4,4'-Biphenol ausgewählt ist.

4. Verfahren zur Herstellung eines Hohlkörpers gemäß dem vorherigen Anspruch, **dadurch gekennzeichnet, daß** es die folgenden Schritte umfaßt:
• In einer ersten Stufe wird in einen konkaven Teil einer Form zur Ausbildung eines Hohlteiles ein ein LCPenthaltender Sperrfilm mit einer Fläche, die wenigstens jener der konkaven Fläche der Form gleich ist, eingebracht, ein konvexer Teil der Form wird oberhalb des Filmes angeordnet und die Form wird geschlossen, um dem Film eine Form aufzudrücken, die jener des herzustellenden Hohlteiles entspricht, worauf die Formteile etwas auseinanderbewegt werden, unter Beibehaltung des Sperrfilms auf dem konvexen Teil der Form;
• In einer zweiten Stufe wird der Sperrfilm im Forminneren durch Einspritzen eines thermoplastischen Strukturmaterials über wenigstens eine Einspritzdüse, die auf der Seite des konkaven Teils der Form angeordnet ist, derart überformt, daß die Lage aus dem Sperrfilm durch eine Außenlage aus dem thermoplastischen Strukturmaterial bedeckt wird, worauf abgekühlt, die Form geöffnet und der so erhaltene Hohlteil entformt wird;
• Die vorstehenden Schritte werden wiederholt, um wenigstens zwei Hohlteile zu erhalten;
• In einer Endstufe werden die Hohlteile verschweißt, um einen Hohlkörper zu erhalten.

5. Verfahren nach dem vorangehenden Anspruch, **dadurch gekennzeichnet, daß** der Sperrfilm ein mehrlagiger Film ist, der wenigstens eine Lage aus LCP und wenigstens eine Lage aus einem adhäsiven Material umfaßt.

6. Verfahren zur Herstellung eines Hohlkörpers nach einem der Ansprüche 1 bis 3, **dadurch gekennzeichnet, daß** es die folgenden Schritte umfaßt:
• In einer ersten Stufe wird ein Hohlteil aus einem thermoplastischen Strukturmaterial durch Verformen eines thermoplastischen Materials, Öffnen der Form und Entformen hergestellt;
• In einer zweiten Stufe wird anschließend die konkave Oberfläche des entformten Teils durch Auftragen eines ein LCP enthaltenden Sperrmaterials überzogen;
• Die vorangehenden Schritte werden wiederholt, um wenigstens zwei überzogene Hohlteile zu erhalten;
• In einer Endstufe werden die überzogenen Hohlteile verschweißt, um einen Hohlkörper zu erhalten.

7. Verfahren nach dem vorangehenden Anspruch, **dadurch gekennzeichnet, daß** das Überziehen durch Aufbringen eines flüssigen, ein LCP in Lösung enthaltenden Anstrichs auf den entformten Teil erfolgt, woran sich ein Trocknen des Teils anschließt.

8. Verfahren nach Anspruch 6, **dadurch gekennzeichnet, daß** das Überziehen durch Aufbringen eines Anstrichs in Form eines ein LCP enthaltenden trockenen Pulvers, dispergiert in einem Gas, auf den entformten Teil erfolgt, wobei das Pulver auf die Oberfläche des die Form verlassenden Teils aufgespritzt wird.

9. Verfahren nach Anspruch 7 oder 8, **dadurch gekennzeichnet, daß** vor dem Entformen im Inneren der Form eine Lage aus adhäsivem Material durch Auf formen auf das thermoplastische Strukturmaterial aufgetragen wird.
